(19)

Europäisches
Patentamt
European
Patent Office
Office européen
des brevets

(11) **EP 2 234 267 A2**

(12) **EUROPEAN PATENT APPLICATION**

(43) Date of publication:
**29.09.2010 Bulletin 2010/39**

(51) Int Cl.:
*H02P 25/02* (2006.01)          *H02P 23/03* (2006.01)
*F04B 49/02* (2006.01)

(21) Application number: **10154798.2**

(22) Date of filing: **26.02.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.03.2009 JP 2009076342**

(71) Applicant: **Hitachi Car Engineering Co., Ltd.
Hitachinaka-shi,
Ibaraki 312-0062 (JP)**

(72) Inventors:
• **Marumoto, Katsuji
Ibaraki 312-0062 (JP)**

• **Yoshida, Kiyoshi
Ibaraki 312-0062 (JP)**
• **Tanno, Heikichi
Ibaraki 312-0062 (JP)**
• **Noda, Junichi
Ibaraki 312-0062 (JP)**
• **Nagano, Masami
Ibaraki 312-0062 (JP)**

(74) Representative: **MERH-IP
Matias Erny Reichl Hoffmann
Paul-Heyse-Strasse 29
80336 München (DE)**

(54) **Sensorless-brushless motor control device and electric fluid pump using the same**

(57)      A sensorless-brushless motor control device comprises an inverter (3), an inverter drive circuit (4) that drives the inverter (3) and a current control part (55) that controls the inverter drive circuit (4) according to a current command from a superior control part and includes a first order lag compensating part. The device is characterized by further comprising a control mode changeover judging part (58) that judges changeover of a control gain of the current control part after startup of the sensorless-brushless motor (2) in response to a motor revolution sensing signal from the inverter drive circuit (4) and a control mode changeover part (52) that changes over the control gain of the current control part (55) in response to an output of the control mode changeover judging part (58).

*FIG. 2*

**Description**

FIELD OF THE INVENTION

The present invention relates to a sensorless-brushless motor control device and an electric fluid pump using the same.

BACKGROUND OF THE INVENTION

In view of fuel economy improvement and environmental problems of cars, hybrid cars driven by a gasoline engine and an electric motor are used in practice. A hybrid car employs so called an idle stop control that stops an engine at the time when the car stops. At the time of the idle stop, it is necessary to ensure an oil pressure for driving actuators such as for an oil circulation system for a transmission and for a clutch for operating the transmission. For this reason, an electric oil pump for ensuring the oil pressure is mounted in a hybrid car.

A sensorless-brushless motor is used for driving the electric oil pump. Since the sensorless-brushless motor has no position sensor, when the motor revolution velocity lowers, the motor may lose synchronization. For this reason, a sensorless-brushless motor control device is proposed that, at the time when the motor revolution number lowers, the motor control is changed over from a current control to a revolution number control through a microcomputer control (for example, see patent document 1: JP-A-2004-166436).

Further, another motor control is proposed as follows. That is, three phase inverter currents iu, iv and iw are sensed via shunt resistors to feed back the same to a motor drive circuit (a current conducting circuit), and the motor is controlled by computing induced voltages of the respective phases (for example, see patent document 2: JP-A-2006-254626).

SUMMARY OF THE INVENTION

However, with regard to the control device in which the motor control is performed via a microcomputer, because of the following points that a microcomputer itself is expensive and the power source therefor complexes due to necessity of a reset function specific to a microcomputer in addition, the cost of the hardware structure thereof becomes expensive.

Further, in the case when starting up a sensorless-brushless motor with an inverter, since there is a startup mode specific to a motor, when the mode is changed over to the current control mode after starting up the motor, the response of the current control delays. As a result, the performance of an electric pump driven by the motor reduces.

An object of the present invention is, for solving the above tasks, to provide a sensorless-brushless motor control device and an electric fluid pump using the same, which can be constituted in a low cost as well as can control a sensorless-brushless motor stably and in high speed by smoothly changeover from the motor startup to the current control.

A sensorless-brushless motor control device according to the present invention comprises an inverter, an inverter drive circuit that drives the inverter and a current control part that controls the inverter drive circuit according to a current command from a superior control part and includes a first order lag compensating part. The device is characterized by further comprising a control mode changeover judging part that judges changeover of a control gain of the current control part after startup of the sensorless-brushless motor in response to a motor revolution sensing signal from the inverter drive circuit and a control mode changeover part that changes over the control gain of the current control part in response to an output of the control mode changeover judging part.

Further, in an electric fluid pump according to the present invention that is driven by making use of a sensorless-brushless motor and a sensorless-brushless motor control device for controlling the sensorless-brushless motor, the sensorless-brushless motor is driven by the above mentioned sensorless-brushless motor control device.

According to the present invention, a sensorless-brushless motor control device and an electric fluid pump using the same can be constituted in a low cost as well as can control a sensorless-brushless motor safely and in high speed by smoothly changeover from the motor startup to the current control.

BRIEF DESCRIPTION OF THE DRAWINGS

Fig.1 is a block diagram showing a schematic constitution of an electric fluid pump that makes use of a sensorless-brushless motor control device according to a first embodiment.
Fig.2 is a block diagram showing a constitution of the sensorless-brushless motor control device according to the first embodiment.

Fig.3 is a circuit diagram showing a constitution of a Duty/V conversion part in Fig.2

Fig.4 is a circuit diagram showing constitutions of a control mode changeover part and a current control part (including a current calculating part) in Fig.2.

Fig.5 is a graph for explaining a control mode changeover operation by the control mode changeover part in Fig.4.

Fig.6 is a circuit diagram showing a constitution of a current sensing part in Fig.2.

Fig.7 is a time chart for explaining a motor current sensing operation of the current sensing part in Fig.6.

Fig.8 is a circuit diagram showing constitutions of a motor revolution sensing part and an in low velocity revolution torque up control part in Fig.2.

Fig.9 is a graph showing a torque up control characteristic for explaining an operation of the in low velocity revolution torque up control part in Fig.8.

Fig.10 is a circuit diagram showing a constitution of a control mode changeover judging part in Fig.2.

Fig.11 is a time chart for explaining a control mode changeover operation from a sensorless control mode to a current control mode.

Fig.12 is a circuit diagram showing constitutions of a control mode changeover part and a current control part (including a current difference calculating part) in a sensorless-brushless motor control device according to a second embodiment.

Fig.13 is a circuit diagram showing a constitution of a Duty/V conversion part in a sensorless-brushless motor control device according to a third embodiment.

Fig.14 is a time chart for explaining an operation of the Duty/V conversion part in Fig.13.

Fig.15 is a circuit diagram showing a constitution of a motor revolution sensing part in a sensorless-brushless motor control device according to a fourth embodiment.

Fig.16 is a time chart for explaining an operation of the motor revolution sensing part in Fig.15.

Fig.17 is a circuit diagram showing a constitution of a control mode changeover judging part in a sensorless-brushless motor control device according to a fifth embodiment.

Fig.18 is a time chart for explaining an operation of the control mode changeover judging part in Fig.17.

DETAILED DESCRIPTION OF EMBODIMENTS

Herein below, preferred embodiment of the present invention will be explained with reference to the drawings.

[FIRST EMBODIMENT]

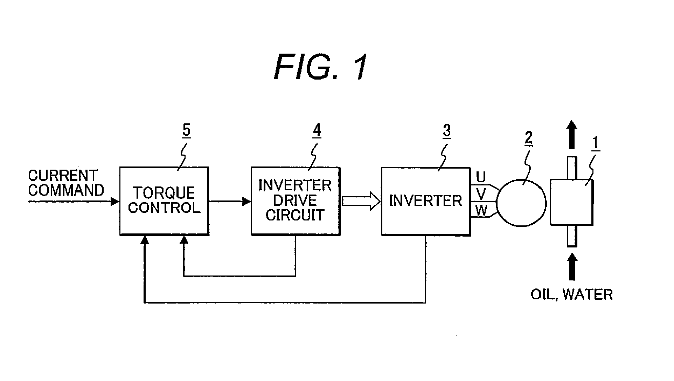

Fig.1 is a block diagram showing a constitution of an electric fluid pump that makes use of a sensorless-brushless motor control device according to a first embodiment.

An electric fluid pump is to suck and discharge such as lubrication oil, actuator drive use oil and coolant use water. As shown in Fig.1, the electric fluid pump 1 is driven by a sensorless-brushless motor 2 (herein below, will be simply called as "motor") directly coupled thereto. The motor 2 is controlled and driven by a sensorless-brushless motor control device (herein below, will be simply called as "motor control device"). The motor control device comprises an inverter 3 for driving the motor 2, an inverter drive circuit 4 for controlling the inverter 3 and a torque control part 5 that outputs a control command to the inverter drive circuit 4.

The torque control part 5 receives a current command in a form of PWM control signal (or an analogue signal) from a superior control device (not illustrated) such as a superior automatic transmission control device (AT control device) and controls via the inverter drive circuit 4 and the inverter 3 so that the current flowing in the motor 2 coincides with the current value of the current command.

During revolution of the motor 2, driving information (such as motor current and revolution number thereof) of the motor 2 is fed back respectively from the inverter 3 and the inverter drive circuit to the torque control part 5.

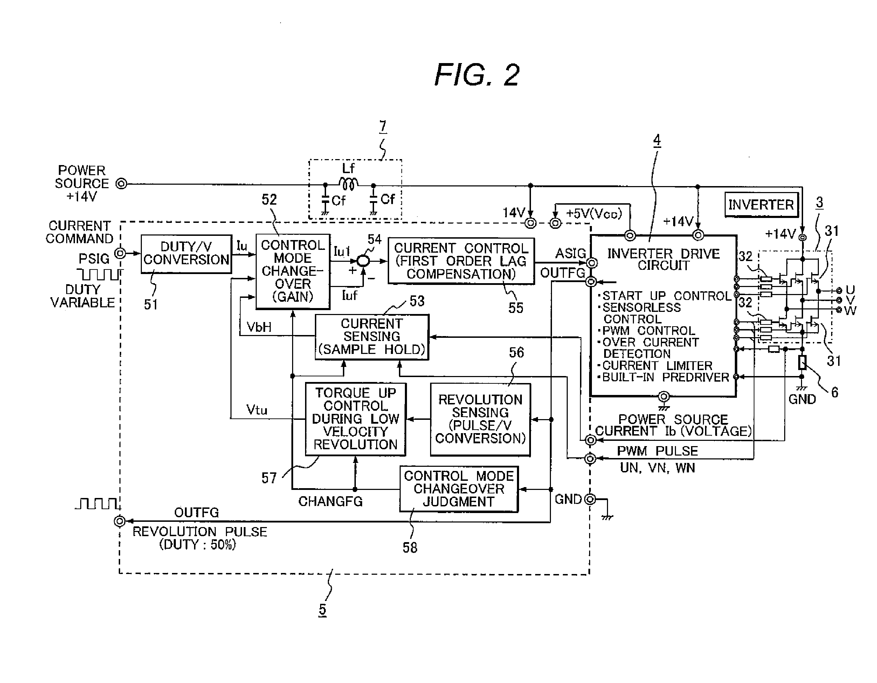

Fig.2 is a block diagram showing a detailed constitution of the motor control device in Fig.1. As shown in Fig. 2, the torque control part 5 comprises a Duty/V conversion part 51, a control mode changeover part 52, a current sensing part 53, a current difference calculating part 54, a current control part 55, a revolution sensing part 56, a torque up control part 57 in low velocity revolution and a control mode changeover judging part 58.

The inverter drive circuit 4 is constituted by an inverter IC with built in a startup control part, a sensorless control part, a PWM control part, an over current sensing part, a current limiter part and a pre-driver part.

The inverter 3 includes six power MOSFETs 31 and gate resistors 32 provided respectively to the gates of the respective power MOSFETs 31. The inverter 3 is operated by PWM signals outputted to the gates of the power MOSFETs 31 from the inverter drive circuit 4 via the gate resistors 32. The inverter 3 applies voltages from output terminals U, V and W thereof to the respective phases (U phase, V phase and W phase) of the motor 2 to thereby drive the motor 2.

Output signals of the inverter drive circuit 4 are inputted to the torque control part 5 as drive use PWM pulses (UN, VN and WN) for the lower arm side power MOSFETs (three pieces) in the inverter 3.

A power source filter 7 used for the torque control part 5, the inverter drive circuit 4 and the inverter 3 etc. is constituted by simple elements of an inductor Lf and a capacitor Cf.

Now, an operation of the motor control device including the torque control part 5, the inverter drive circuit 4 and the inverter 3 will be explained.

When a Duty signal PSIG in a form of PWM pulse representing a current command is inputted from a superior control device to the Duty/V conversion part 51 in the torque control part 5, the Duty/V conversion part 51 converts the Duty signal in a form of pulse to an analogue signal and outputs the same to the control mode changeover part 52 as a current command lu. Further, when the current command PSIG is an analogue signal, the current command PSIG can be input directly to the control mode changeover part 52 without routing the Duty/V conversion part 51.

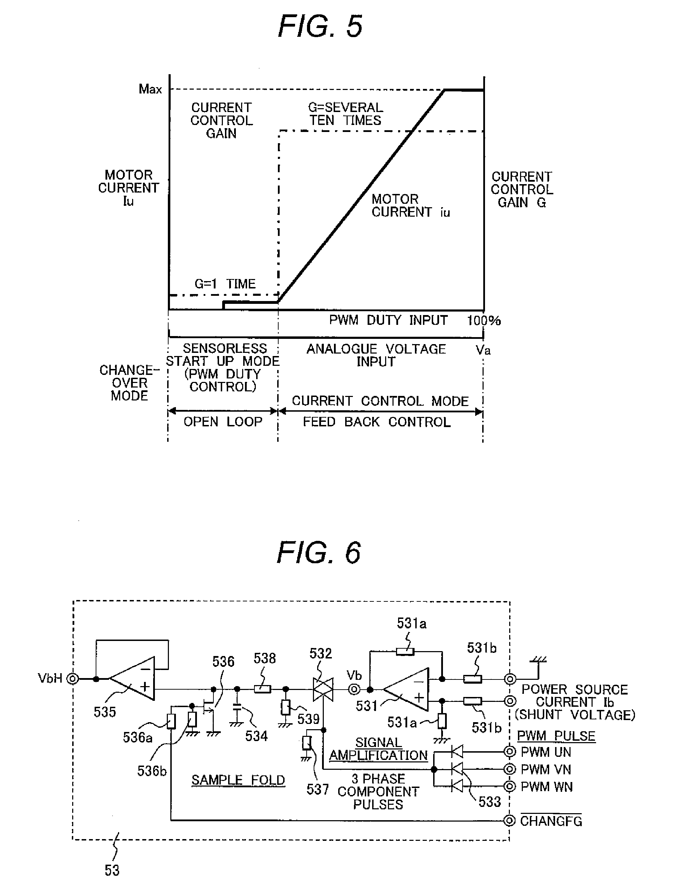

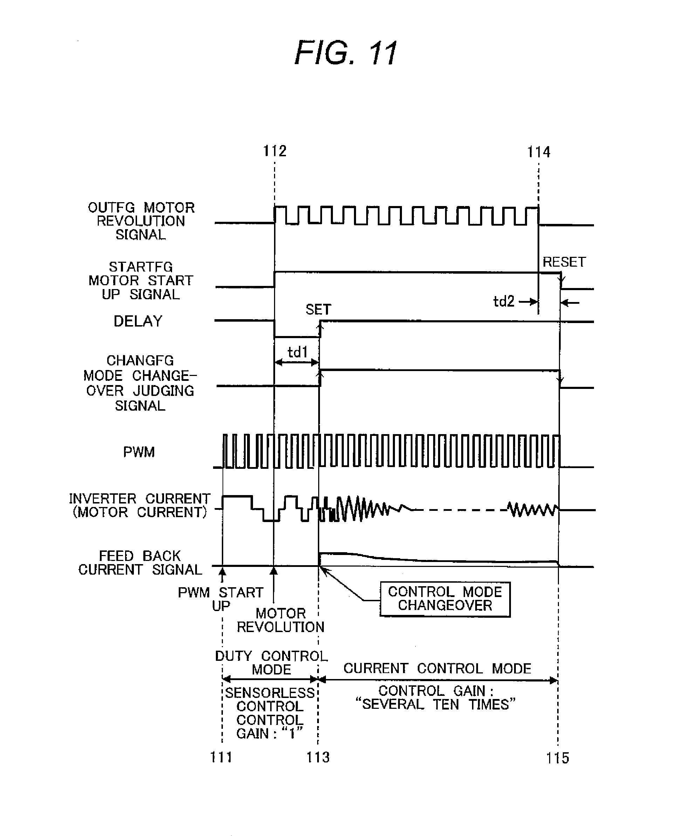

The control mode changeover part 52 receives inputs of the current command lu from the Duty/V conversion part 51, a current feed back signal VbH from the current sensing part 53, and a motor current increase command signal Vtu during low velocity revolution from a torque up control part 57. Further, the control mode changeover part 52 changes over a feed back control gain for current control in accordance with a control mode changeover judging signal CHANGFG inputted from the control mode changeover judging part 58. The control gain changeover and the changeover timing thereof will be explained later (see Figs.5 and 11).

The control mode changeover part 52 outputs a current command value lu1 and a current feed back value luf. A current difference calculating part 54A calculates a current difference between a value of the command value lu1 and a current feed back value luf and outputs the current difference to the current control part 55. The current control part 55 performs a stabilized current control with a first order lag compensation and outputs an analogue signal ASIG for the current control to the inverter drive circuit 4.

The inverter drive circuit 4 performs a series of controls necessary for the motor control such as the startup control and the sensorless-brushless control, rotates the motor 2 via the inverter 3 and drives the electric fluid pump 1. During the motor 2 is driven, a power source current applied to the motor2 flows to a shunt resistor 6 used for sensing the current. A voltage across the shunt resistor 6 is sensed as the power source current Ib that is fed back to the current sensing part 53 to perform a current control.

Herein below constitutions and operations of the Duty/V conversion part 51, the control mode changeover part 52, the current difference calculating part 54, the current control part 55, the current sensing part 53, the revolution sensing part 56, the torque up control part 57 and the control mode changeover judging part 58 will be explained successively.

[Duty/V conversion part 51]

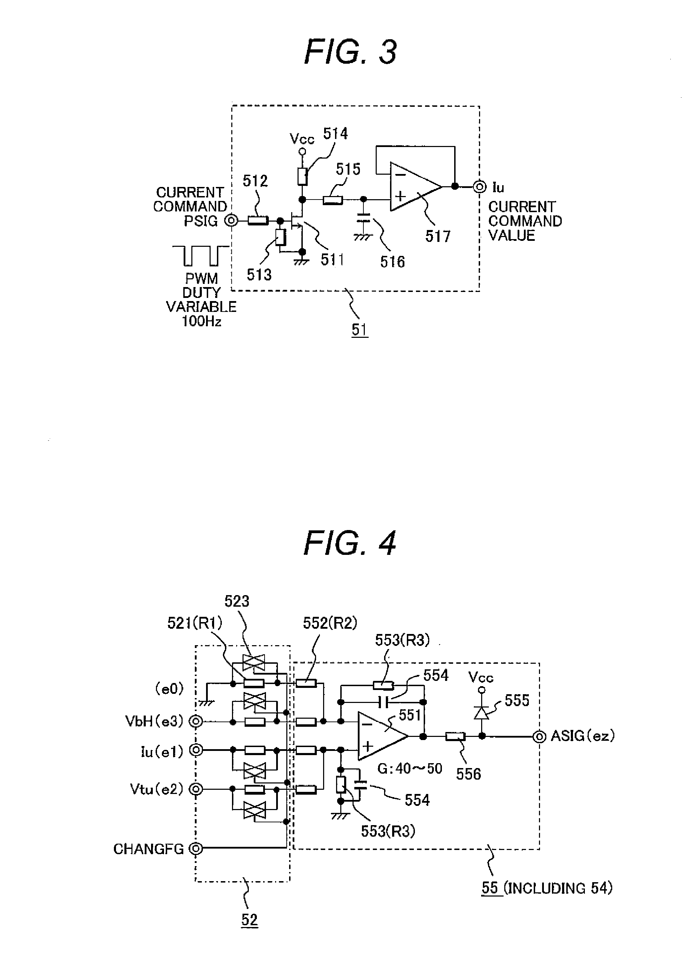

Fig.3 is a circuit diagram showing an example of circuit constitution of the Duty/V conversion part 51.

As shown in Fig.3, the Duty/V conversion part 51 includes a transistor 511 to which input resistors 512, 513 and an output resistor 514 are connected, and the transistor 511 inverts a current command PSIG as a pulse signal inputted from a superior control device.

A rectangular wave output of the transistor 511 is smoothed by a resistor 515 and a capacitor 516 serving as a filter, and the current command value lu in a form of analogue signal is outputted via a buffer amplifier 517 in which the smoothed rectangular wave was input.

In the present embodiment, although the Duty/V conversion part 51 is constituted by analogue elements, the same can be constituted by digital elements.

[Control mode changeover part 52, current control part 55 and current difference calculating part 54]

Fig.4 is a circuit diagram showing constitutions of the control mode changeover part and the current control part.

As shown in Fig.4, since the current difference calculating part 54 and the current control part 55 are constituted integrally, these constitutions and operations will be explained as those of the current control part 55.

The current control part 55 comprises an operational amplifier 551 (control gain G thereof is, for example, 40~50), a feed back resistor 553 (resistance value thereof is R3) and a capacitor 554 connected in parallel with the feed back resistor 553.

The operational amplifier 551 receives inputs of the current command value lu (namely voltage value: e1) representing an input signal from the Duty/V conversion part 51, the motor current increase command signal Vtu (voltage value: e2) representing an input signal from the torque up control part 57 during the low velocity revolution, and the current feed back signal VbH (voltage value: e3) representing an input signal from the current sensing part 53, and outputs the analogue signal ASIG (voltage value: ez) to the inverter drive circuit 4.

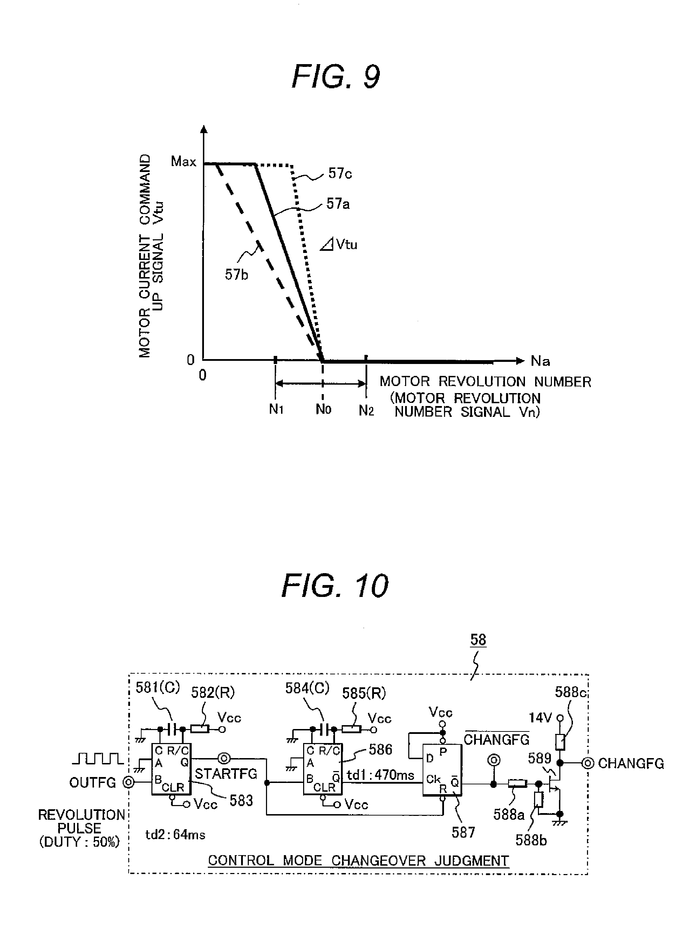

Two input terminals of the operational amplifier 551 are connected to composite four pair input resistors each which is constituted by one input resistor 521 (resistance value: R1) and one input resistor 552 (resistance value: R2) connected in series. The current command value lu, motor current increase command signal Vtu and current feed back signal VbH are inputted to the operational amplifier 551 via the composite pair input resistors (resistance value: R1+R2). Among these input signals, the current command value lu and the motor current increase command signal Vtu are compositely inputted to (+) input terminal of the operational amplifier 551 via two pair input resistors. The current feed back signal VbH and a grounded signal (input voltage: e0) are also compositely inputted to (-) input terminal of the operational amplifier 551 via two pair input resistors. Each analogue switch 523 is connected in parallel to each input resistor 521 in each pair. The analogue switch 523 is turned ON and OFF with the control mode changeover judging signal CHANGFG outputted from the control mode changeover judging part 58 to changeover the control gain for the current control. The operation timing of the control mode changeover judging signal CHANGFG will be explained later (see Figs.10 and 11).

One group of a feed back resistor 553 and a capacitor 554 is connected between (-) input terminal and the output terminal of the operational amplifier 551 and another group of a feed back resistor 553 and a capacitor 554 is connected between (+) input terminal thereof and the ground. The feed back resistor 553 and the capacitor 554 constitute the first order lag compensation elements performing control compensation for control stabilization during the feed back control.

The output terminal of the operational amplifier 551 is connected to a diode 555 and to an output resistor 556, and the diode 555 and the output resistor 556 clamp the maximum value of the output voltage ez to at voltage Vcc.

Herein, the relationship between the output voltage (ez), the input voltages (e0~e3) and the control gain G (R3/R1+R2) of the current control part 55 is expressed as in the following equation (1).

$$ez=(R3/R1+R2)(e1+e2-e0-e3) \qquad -(1)$$

During normal operation (when the motor is revolving in middle and high velocity), since the motor current increase command signal Vtu (e2) and e0 are zero, and the current command value lu (e1) and the current feed back signal VbH (e3) become same values, the control gain G is determined by the ratio (R3/R1+R2) of the resistances of the input resistors 521, 522 and that of the feed back resistor 553. Accordingly, by changing the resistance of the input resistance R1, for example, when starting up the motor in the sensorless startup mode, the control gain G of the output voltage (ez) with respect to the current command value lu (e1) can be set at "1". Further, by changing the input resistance R1, the control gain G can be set at "several ten times" so as to speed up the response of the current control system during the current control mode.

Fig.5 is a graph for explaining a control mode changeover operation performed by the control mode changeover part 52. In Fig.5, the abscissa represents input signal voltages in the cases of Duty input in PMW pulse signal and of analogue voltage input, and the ordinate represents the motor current lu (solid line) and the current control gain G (one dotted chain line).

The control modes changed over by the control mode changeover part 52 include the sensorless startup mode in which the motor 2 is started up in an open loop and sensorless, and the current control mode in which the current control is performed through the current feed back control after starting up the motor.

In the sensorless starting up mode, the control gain G is set at "1", and the motor 2 is started up in an open loop. After the motor starting up, when the mode is changed over to the current control mode, the control gain G of the current control part 55 is set at "several ten times" and the current control is performed by speeding up the current control response. As a current control in such instance, the control is performed such that the motor current lu is increased in response to a change in the control input (input voltage). As explained above, the control mode is changed over such that the motor 2 is started up in the open loop and sensorless during motor starting up, and the current control is performed through the current feed back control after the motor starting up; so that, the motor 2 can be operated smoothly in a stable manner. Further, the detailed time sequences during the motor starting up and during the control mode changeover will be explained later (see Fig.11).

[Current sensing part 53]

Fig.6 is a circuit diagram showing a constitution of the current sensing part 53.

As shown in Fig.6, the current sensing part 53 comprises an operational amplifier 531, an analogue switch 532, gate drive use diodes 533 for the analogue switch 532, a voltage hold use capacitor 534, a buffer amplifier 535 and a control mode changeover use transistor switch 536.

The operational amplifier 531 is connected to a feed back resistor 531a and an input resistor 531b. When a voltage across the shunt resistor 6 (several tens mm Ω) in Fig.2 is inputted as a power source current lb to the operational amplifier 531, the operational amplifier 531 amplifies the same and outputs voltage Vb.

The analogue switch 532 is connected to an operation stabilizing use input resistor 537 and output resistors 538, 539. The gate of the control mode changeover use transistor switch 536 is connected to input resistors 536a and 536b to thereby input the mode changeover judging signal CHANGFG.

The gate drive use diodes 533 receives respectively inputs of PWM pulse control signals: PWM UN, PWM VN and PWM WN for three phases for controlling the inverter 3 , the gate drive use diodes 533 are provided (three pieces in the drawing) for the respective input signals.

An operation of the current sensing part 53 will be explained.

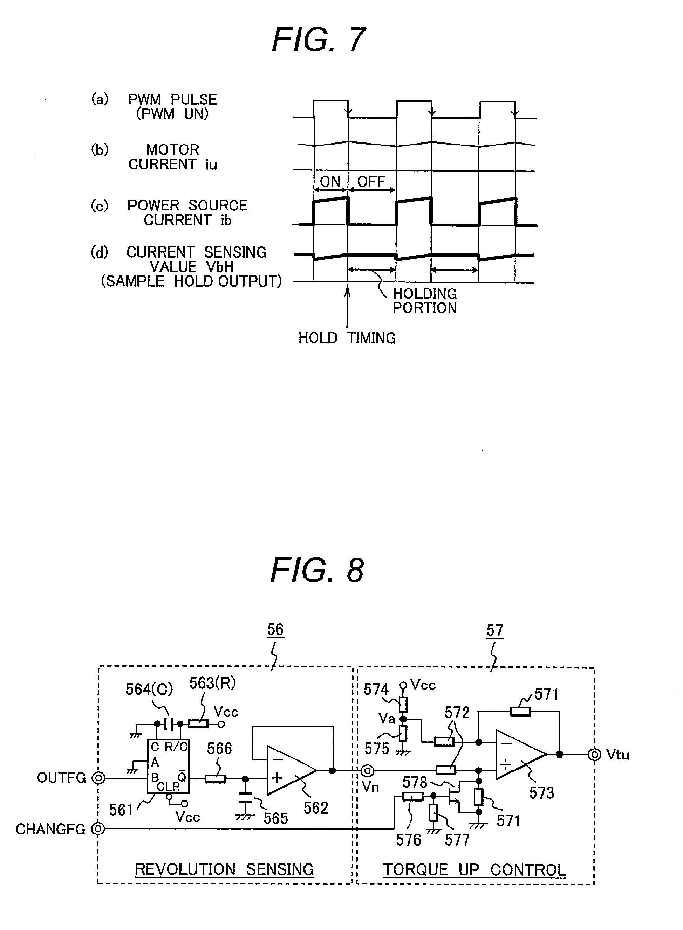

Fig.7 is a time chart for explaining a motor current sensing operation of the current sensing part 53. Further, the operation waveforms in Fig.7 show those for one phase of a three phase inverter.

In Fig.7, information to be used for the current control is a motor current (inverter current) iu having an operation waveform as shown in Fig.7 (b). However, a sensing circuit for directly sensing the motor current iu is complex in its constitution and expensive. Therefore, an intermittent power source current ib is usually sensed by making use of a shunt resistor and averaged by a filter as shown in Fig.7 (c). However, in the method of using the averaged power source current ib, the response of the current control cannot be speeded up, because a delay of current sensing is caused depending on the time constant of the filter. Further, the relationship between the motor current iu and the power source current ib varies depending on the PWM pulse Duty ($\alpha$) in a manner of iu=ib/$\alpha$, and a problem arises that the relationship between the motor current iu and the power source current ib does not assume a 1:1 relationship.

Therefore, in the current sensing part 53: at first, the sensed power source current ib is amplified by the operational amplifier 531 to obtain voltage Vb; the PWM pulse control signals (PWM control use gate pulse signals) PWM UN, PWM VN and PWM WN are inputted to the gate of the analogue switch 532 as shown in Fig.7 (a); and the analogue switch 532 is turned OFF in synchronism with the trailing of the pulse. Thereby, the power source current value (corresponding to the output voltage Vb of the operational amplifier 531) immediately before the analogue switch 532 is turned OFF is held in the voltage hold use capacitor 354 as shown in Fig.7 (d). Namely, by holding the voltage in the OFF period of the power source current ib in the capacitor 534, the voltage outputted from the current sensing part 53 becomes non intermittent sensing value, thereby, a sensing value close to the waveform of the motor current iu can be obtained.

The voltage signal (the voltage at the hold use capacitor 534) serving as the power source current sensing signal is outputted as the current feed back signal VbH via the buffer amplifier 535.

Now, as shown in Fig.6, the voltage hold use capacitor 534 is connected to the control mode changeover use transistor 536 in parallel. The transistor switch 536 works as a switch for preventing the motor current from feeding back during the sensorless startup mode operation of the inverter 3. The changeover timing from the sensorless startup mode to the current control mode will be explained later (see Fig.11).

Further, the voltage hold capacitor 534 is different from a filter use capacitor in view that the voltage hold capacitor is required to be able to hold the voltage only during the PWM OFF period. Namely, since the PWM frequency such as for the inverter 3 is generally high to have several tens kHz, the time required for holding is short and the voltage hold use capacitor 534 can be constituted by a capacitor with a small capacity.

[Revolution sensing part 56 and torque up control part 57 in low velocity revolution]

Fig.8 is a circuit diagram showing constitutions of the motor revolution detecting part 56 and the torque up control part 57.

As shown in Fig.8, the motor revolution sensing part 56 comprises a monostable multivibrator (MM) 561 and a buffer amplifier 562. The MM 561 is connected to a resistor 563 used for setting time constant and a capacitor 564. An input signal to the MM 561 is a motor revolution signal OUTFG from the inverter drive circuit 4. The output terminal side (the input terminal side of the buffer amplifier 562) of the MM 561 is connected to a smoothing use capacitor 565 and a resistor 565 that smooth a pulse signal and convert the same into an analogue signal. A pulse signal outputted from the MM 561 is converted into an analogue signal through the smoothing use capacitor 565 and the resistor 565, and the analogue signal is amplified by the buffer amplifier 562 and is inputted to the torque up control part 57 in low velocity revolution as a motor revolution number signal Vn.

The torque up control part 57 used in the low velocity revolution comprises an operational amplifier 573 and a switch use transistor 578. The operational amplifier 573 is connected to a feed back resistor 571 and an input resistor 572. The (-) input terminal of the operational amplifier 573 is connected to voltage Va setting use division resistors 574 and 575 that determine an operation threshold value for the motor revolution number signal Vn via the input resistor 572. The switch use transistor 578 is connected to the (+) input terminal side of the operational amplifier 573. The switch use transistor 578 receives an input of the mode changeover judging signal CHANGFG via base resistors 576 and 577.

Herein, the operation of the revolution sensing part 56 and the torque up control part 57 in low velocity revolution will be explained.

The pulse signal serving as the motor revolution signal OUTFG inputted to the MM 561 in the motor revolution sensing part 56 is one whose pulse frequency increases in proportional to the motor revolution number. The ON time of the output pulse from the MM 561 is set in advance in such a manner that the Duty of the pulse is nearly maximized at the motor maximum revolution number by making use of the time constant setting use resistor 563 and the capacitor 564. Through this setting, the Duty of a pulse reduces during the motor low velocity revolution. When a pulse signal whose variation of Duty represents a variation in revolution number of the motor 2 is smoothed by the smoothing use capacitor 565 and the resistor 565, the motor revolution number signal Vn in a form of analogue signal whose voltage is proportionate to the motor revolution number can be obtained.

When the motor revolution number signal Vn in low velocity revolution is inputted to the torque up control part 57, the torque up control part 57 outputs the motor current increase command signal Vtu.

The motor current increase command signal Vtu will be explained with reference to Fig.9.

In general, since a sensorless-brushless motor, which is also employed in the present embodiment, is not provided with a position sensor, when a heavy load is applied to the motor 2 during a low velocity revolution of the motor 2, the motor may cause a loss of synchronization and thereby the motor 2 likely stops. Therefore, in the present embodiment, during a low velocity revolution of the motor 2, a signal commanding to increase the motor current iu is outputted to the current control part 55 (the control mode changeover part 52) to thereby prevent the motor from losing the synchronization during the motor low velocity revolution.

Fig.9 is a graph showing a torque up control characteristic for explaining an operation of the torque up control part 57 in low velocity revolution. In Fig.9, the abscissa represents motor revolution number Na (the motor revolution number signal Vn), and the ordinate represents the motor current increase command signal Vtu.

When a load applied to the motor increases during the operation thereof in a steady state, the motor revolution number Na (Vn) lowers. As shown in Fig.9, the torque up control part 57 performs the torque up control in such a manner that when the motor revolution number Na lowers below a threshold value NO, the motor current increase command signal Vtu is gradually raised to increase the motor current iu.

However, the maximum value of the motor current increase command signal Vtu is determined at the allowable maximum current value of the motor 2. Further, the rise rate ΔVtu of the motor current increase command signal Vtu is set to be optimum in view of a relationship with a load and to assume, for example, any one of characteristic lines 57a~57c. The threshold value NO of the motor revolution number Na from which the motor current command up starts is set at an optimum value within a range of N1~N2 depending on the motor load.

As has been explained above, it is possible to prevent the motor from causing a lost of synchronization when a load applied to the motor becomes large, with the motor current increase command signal outputted from the revolution torque up control part 57 in the low velocity revolution.

[Control mode changeover judging part 58]

Fig.10 is a circuit diagram showing a constitution of the control mode changeover judging part 58.

As shown in Fig.10, the control mode changeover judging part 58 comprises a retriggerable monostable multivibrator (RMM) 583, a monostable multivibrator (MM) 586, a flip flop (FF) circuit 587 and a transistor switch 589. The RMM 583 is connected to an external capacitor 581 and an external resistor 582 for determining a time constant. The MM 586 is connected to an external capacitor 584 and an external resistor 585 for determining a time constant. The transistor switch 589 is connected to input resistors 588a, 588b and an output resistor 588c.

The RMM 583 is to output a motor startup signal STARTFG in response to the motor revolution signal OUTFG inputted from the inverter drive circuit 4. The MM 586 is to input the motor startup signal STARTFG and output a delay signal that turns ON with a predetermined delay from the turning ON of the motor startup signal STARTFG (the delay time td1 is, for example, 470ms). The delay time td1 is set optimally depending on at least of the capacity and characteristics of the motor 2. The FF circuit 587 is to output the mode changeover judging signal CHANGFG in response to the motor startup signal SRARTFG inputted from the RMM 582 and the delay signal inputted from the MMM 586.

Now, an operation of the control mode changeover judging part 58 will be explained together with a series of operations from the startup of the inverter 3 and the changeover of the control mode to the stopping of the inverter 3.

Fig.11 is a time chart for explaining control mode changeover operation from a sensorless control mode to a current control mode.

As shown in Fig.11, when the current command PSIG is provided from a superior control device, the PWM in the inverter 3 is started up to flow the inverter current (motor current) iu, and an operation under the sensorless control mode is started (at timing 111). When the operation of the inverter 3 stabilizes and the motor 2 reaches to a normal revolution number, the motor revolution signal OUTFG is generated from the inverter drive circuit 4 (at timing 112). The control mode changeover judging part 58 turns ON the motor startup signal STARTFG at the time of rising of the motor revolution signal OUTFG. Thereafter, the control mode changeover judging part 58 turns ON the motor changeover signal CHANGFG after a predetermined time td1 has passed, and outputs the same to the control mode changeover part 52, the current sensing part 53 and the in low velocity revolution torque up control part 57 (at timing 113).

In the period from the PWM starting up to the rising of the mode changeover judging signal CHANGFG, the motor 2 is operated in the sensorless startup mode, and the control gain G in the current control part 55 is et at "1". Further, during the operation in the sensorless startup mode, the current feed back signal from the current sensing part 53 is in a reset state (see the above referred to transistor switch 536 in Fig.6).

In synchronism with the rising of the mode changeover judging signal CHANGFG, in order to change over from the sensorless control mode to the current control mode, the mode changeover part 52 to which the mode changeover judging signal CHANGFG is inputted changes over the control gain G to "several ten times", at the same time the current sensing part 53 feeds back the current fed back signal VbH to the current control part 55 (control mode changeover part 52). By means of these operations, the changeover from the sensorless startup mode to the current control mode is completed.

Further, with regard to the stopping of the motor 2, when the motor revolution signal OUTFG stops (at timing 114), after time td2 has passed from the stop, the motor startup signal STARTFG turns OFF and the motor 2 stops (at timing 115).

According to the motor control device of the present embodiment, the motor 2 is started up while setting the control gain G at 1. After starting up the motor 2, when changing over from the sensorless startup mode to the current control mode, the control gain is changed over to a proper value suitable to the current control (several ten times in the present embodiment). Thereby, the changeover of the control mode gets smoothed and the stability of changeover to the current control mode is enhanced as well as the response speed of the current control can be accelerated. Further, if the electric fluid pump 1 is configured to be driven by making use of the control device according to the present embodiment, an electric fluid pump having an excellent stability and response performance for driving the pump can be provided.

According to the motor control device of the present embodiment, since the feed back current is sampled and held in response to the intermittent power source current of the inverter, and the sample-held current value is used as the motor current, it is possible to obtain a motor current approximating to the motor current iu obtained by directly sensing from the motor, and to obtain the current control characteristic in which the motor current become proportionate to the current command value in 1:1.

According to the motor control device of the present embodiment, the circuit thereof can be constituted by making use of an integratable inverter drive circuit and analogue circuit or digital circuit without using an expensive microcomputer. In particular, since an expensive hardware of which power source circuit complexes due to a reset function specific to a microcomputer can be omitted, the hardware constitution is simplified and the cost reduction thereof can be achieved. As a result, a cost reduction of the electric fluid pump can be achieved by making use of the motor control device of the present embodiment.

According to the motor control device of the present embodiment, even when a heavy load is applied to the electric fluid pump 1 and the revolution of the motor 2 lowers, it is possible to prevent the motor from losing the synchronization during a low velocity revolution by the torque up control.

[SECOND EMBODIMENT]

The motor control device of the present embodiment is different from the first embodiment on the following point that integrates the above-mentioned control mode changeover part 52, current difference calculating part 54 and current control part 55 in Fig.4, and comprises the current control part 59 with a circuit constitution different from that of Fig.4.

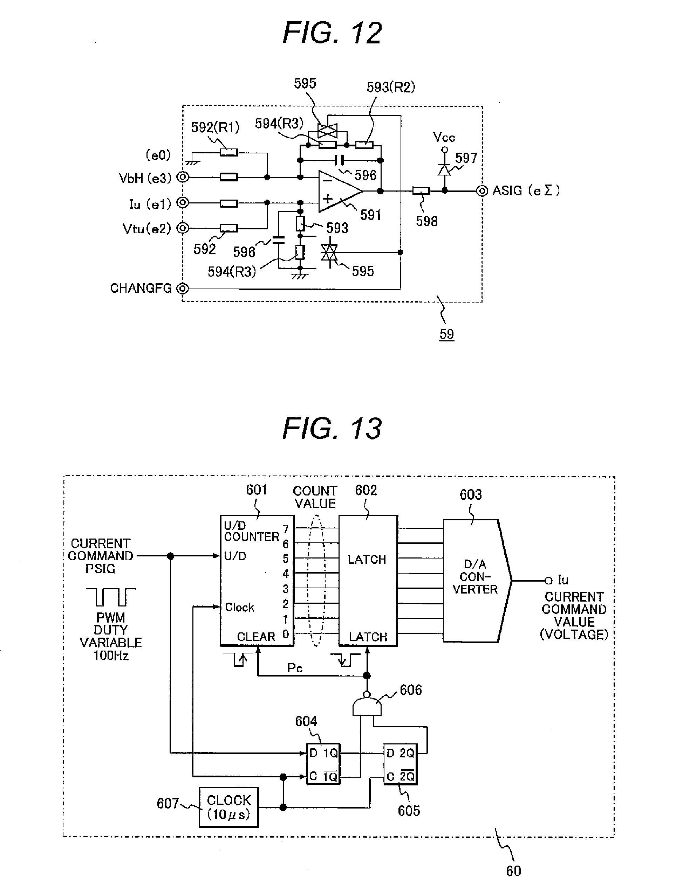

Fig.12 is a circuit diagram showing constitutions of a control mode changeover part and a current control part (including a current difference calculating part) in a motor control device according to a second embodiment. As shown in Fig.12, the current control part 59 includes an operational amplifier 591, and the operational amplifier 591 inputs a current command lu (voltage: e1) in an analogue input signal, a current feed back signal VbH (voltage: e3) and a motor current increase command signal Vtu (voltage e2) to thereby output an analogue signal ASIG (voltage: ez).

The inputs of the operational amplifier 591 are provided with input resistors 592 for each input signal, the current command lu and the motor current increase command signal Vtu are inputted to (+) input terminal of the operational amplifier 591 via the respective input resistors 592, and the current feed back signal VbH is inputted to (-) input terminal of the operational amplifier 591 via the input resistor 592. Further, the (-) input terminal is connected to a further input resistor 592 being grounded (input voltage: 0).

In feed back resistors for the operational amplifier 591, one group of a feed back resistor 593 (resistance value: R2) and a feed back resistor 594 (resistance value: R3) connected in series, is connected between the (-) input terminal and the output terminal of the operational amplifier 591. Another group is connected between the (+) input terminal of the operational amplifier 591 and the ground. Each of the feed back resistors 594 is connected to an analogue switch 595 in parallel thereto. The analogue switch 595 is turned ON and OFF by the control mode changeover judging signal CHANGFG outputted from the control mode changeover judging part 58 to change over the control gain for the current control. Further, across the feed back resistors 593 and 594 in series is connected to a capacitor 596 in parallel, and a first order lag compensation element is constituted with the feed back resistors 593, 594 and the capacitor 596. A diode 597 and a resistor 598 connected to the output terminal of the operational amplifier 591 clamp the maximum value of the output voltage to at Vcc.

Herein, the relationship between the output voltage ez of the current control part 55, input voltages (e0~e3) and the control gain G (R2+R3/R1) of the current control part 59 according to the present embodiment is expressed as in the following equation (2).

$$ez=(R2+R3/R1)(e1+e2-e0-e3) \quad - \quad (2)$$

Like the circuit in Fig.4, during the normal operation, since the motor current increase command signal Vtu (e2) and e0 are zero, and the current command value lu (e1) and the current feed back signal VbH (e3) are same values, the control gain G is determined by the ratio (R2+R3/R1) of the input resistor 592 and the feed back resistors 593 and 594. Accordingly, by changing the input resistance R3, for example, when starting up the motor in the sensorless startup mode, the control gain G of the output voltage (ez) with respect to the current command value lu (e1) can be set at "1". Further, by changing the input resistance R1, the control gain G can be set at "several ten times" so as to speed up the response of the current control system during the current control mode.

[THIRD EMBODIMENT]

The motor control device of the present embodiment is different from the first embodiment on the following point that the above mentioned Duty/V conversion part 51 in Fig.2 is constituted by a digital circuit.

Fig.13 is a circuit diagram of the Duty/V conversion part constituted by a digital circuit. As shown in Fig.13, a duty/V conversion part 60 of the present embodiment comprises a U/D (up and down) counter 601, a latch circuit 602 that latches a count value of the U/D counter 601, a D/A converter 603 that converts the latched digital data into an analogue value, D type flip flop circuits (herein below, will be called as D-FF circuit) 604 and 605 that are inputted of PWM pulses of the current command PSIG from a superior control device and output counter input pulses to the U/D counter 601, a NAND circuit 606 that adds the output of the D-FF circuits 604 and 605, and a clock generating circuit 607 that feeds clocks to the D-FF circuits 604 and 605.

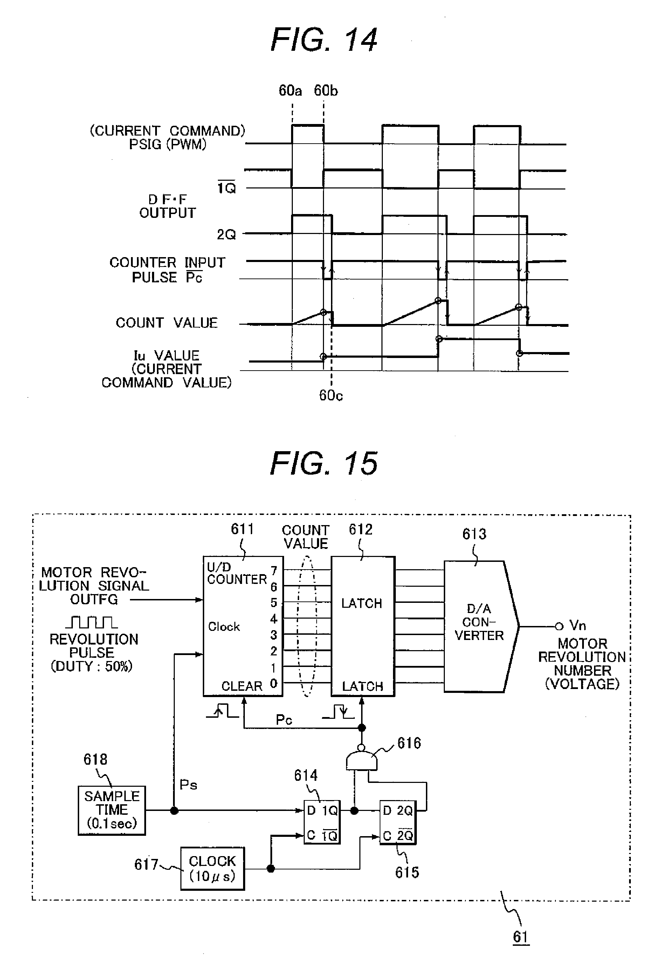

An operation of the Duty/V conversion part 60 will be explained with reference to Fig.14.

Fig.14 is a time chart showing an operation timing of the Duty/V conversion part 60. In Fig.14, PWM pulses of the current command PSIG whose duty are varied are inputted from a superior control device to the U/D counter 601 and to the D-FF circuits 604 and 605. The U/D counter 601 always receives input of clocks (for example, 10μs) from the clock generating circuit 607. The D-FF circuits 604 and 605 respectively output two output signals 1Q (negative) and 2Q (positive). The NAND circuit 606 produces a counter input pulse Pc representing a NAND output of the two output signals 1Q (negative) and 2Q (positive) and outputs the same to the U/D counter 601 and to the latch circuit 602.

The Duty/V conversion operation for the current command value lu is performed by making use of the current command PSIG, clock and counter input pulse Pc. Specifically, in Fig.14, the U/D counter 601 begins count up when the current command PSIG turns ON, and increments the count value (at timing 60a). When the current command PSIG is turned OFF, the latch circuit 602 latches the count value of the U/D counter 601 in synchronism with the trailing of the counter input pulse Pc (at timing 60b). Thereafter, the counter 601 resets the count value in synchronism with the rising of the counter input pulse Pc (at timing 60c). The count value latched in synchronism with the trailing with the counter input pulse Pc is converted from a digital signal to the current command value lu of an analogue signal by the D/A converter 603.

Since the latched value of the count value of the counter 601 varies depending on the ON time of the current command PSIG in PWM, the Duty of the PWM for the current command PSIG can be measured.

Namely, the Duty/V conversion part 60 of the present embodiment can convert the current command PSIG into the current command lu in an analogue signal like the analogue type Duty/V conversion part in Fig.3.

[FOURTH EMBODIMENT]

The motor control device of the present embodiment is different from the first embodiment on the following point that the above mentioned motor revolution sensing part 56 in Fig.2 is constituted by a digital circuit.

Fig.15 is a circuit diagram of the motor revolution sensing part constituted by the digital circuit. As shown in Fig.15, the motor revolution sensing part 61 comprises a U/D counter 611, a latch circuit 612, a D/A converter 613, two D-FF circuits 614 and 615, a NAND circuit 616 and a clock generating circuit 617, like the Duty/V conversion part 60 in Fig.13, and further comprises a sample time generating circuit 618 for generating a sample pulse Ps. A different point of the motor revolution sensing part 61 from the Duty/V conversion part 60 is that the sample time generating circuit 618 is added, and the motor revolution signal OUTFG and the sample pulse Ps (for example, 0.1sec) are inputted to the U/D counter 611.

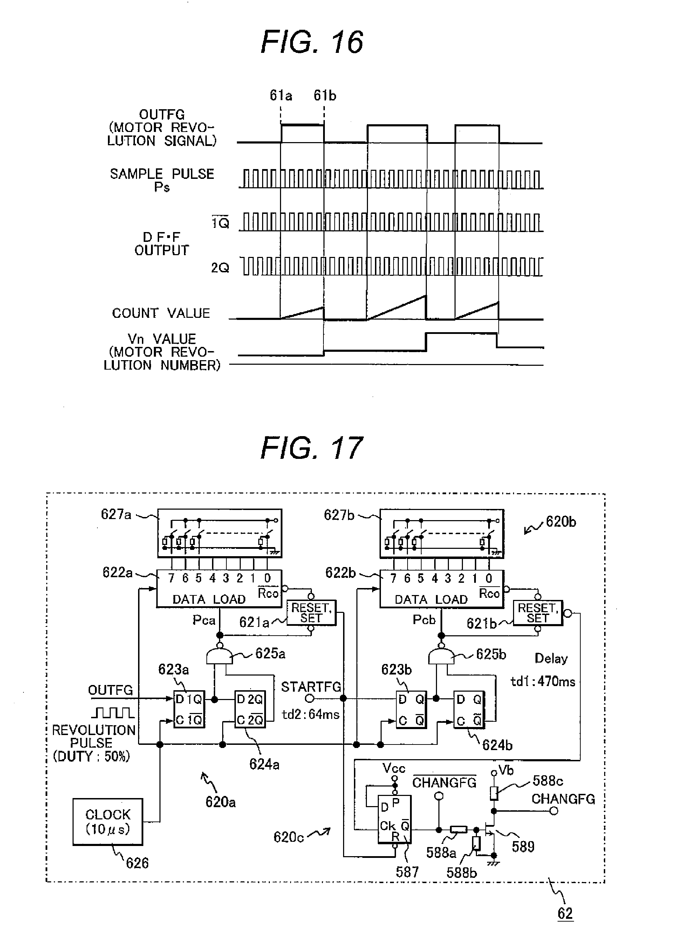

An operation of the motor revolution sensing part 61 will be explained with reference to Fig.16.

Fig.16 is a time chart showing an operation timing of the motor revolution sensing part 61. In Fig.16, when a motor revolution signal OUTFG is inputted to the CLOCK input of the U/D counter 611, the U/D counter 611 begins counting of the sample pulses Ps at the same time when the OUTFG is turned ON, and increments the count value (at timing 61a). When the motor revolution signal OUTFG is turned OFF, the count value is latched in the latch circuit 612, and the count value in the U/D counter 611 is reset (at timing 61b). Since the ON time of the motor revolution signal OUTFG varies according to variation of the revolution number of the motor 2, the latched counter value (latched value) varies in response to the variation. The latched value is converted into an analogue signal by the D/A converter 613 to outputted therefrom. Namely, in the motor revolution sensing part 61, the motor revolution signal OUTFG in a form of pulse signal is outputted as the analogue voltage Vn representing a motor revolution number.

In the present embodiment, since the motor revolution sensing part 61 is constituted by a digital circuit, the external capacitors 564 and 565 are unnecessitated when compared with the motor revolution sensing part 56 constituted by analogue elements as in Fig.8. Accordingly, the circuit constituting the motor revolution sensing part 61 can be easily integrated, as a result, the size and cost reduction of the motor revolution sensing part 61 can be achieved.

[FIFTH EMBODIMENT]

The motor control device of the present embodiment is different from the first embodiment on the following point that the above mentioned control mode changeover judging part 58 in Fig.2 is constituted by a digital circuit.

Fig.17 is a circuit diagram of the control mode changeover judging part 62 constituted by a digital circuit. As shown in Fig.17, the control mode changeover judging part 62 is primarily constituted by a STARTFG signal producing part 620a that produces a motor startup signal STARTFG from the motor revolution signal OUTFG, a delay signal producing part 620b that produces a delay time td1 (delay signal) for the control mode changeover judging signal CHANGFG and a CHANGFG signal producing part 620c that produces a control mode changeover judging signal CHANGFG.

The STARTFG signal producing part 620a is comprised of: a counter 622a; two D type flip flop (D-FF) circuits 623a, 624a and a NAND circuit 625a that generate input pulses Pca for the counter 622a; a clock generating circuit 626 (clock cycle is, for example, 10μs) that feeds clocks to the counter 622a and the D-FF circuits 623a, 624a; a preset data setting circuit 627a that sets data for a timer; and a reset-set type flip flop (RS-FF) circuit 621a that inputs the output from the counter 622a and the input pulse Pca, and outputs the motor startup signal STARTFG.

The delay signal producing part 620b, like the above referred to motor startup signal producing part 620a, is comprised of a counter 622b; two D type flip flop (D-FF) circuits 623b, 624b and a NAND circuit 625b that generate input pulses Pca for the counter 622b; a clock generating circuit 626 (the clock generating circuit in the motor startup signal producing part 620a is commonly used) that feeds clocks to the counter 622b and the D-FF circuits 623b, 624b; a preset data setting circuit 627b that sets data for a timer; and a reset-set type flip flop (RS-FF) circuit 621b that inputs the output from the counter 622b and the input pulse Pca and outputs the motor delay signal.

The mode changeover judging signal producing part 620c, like the mode changeover judging part 58 in Fig. 10, comprises an FF circuit 587 and a transistor switch 589 to which input resistors 588a, 588b and an output resistor 588c are connected.

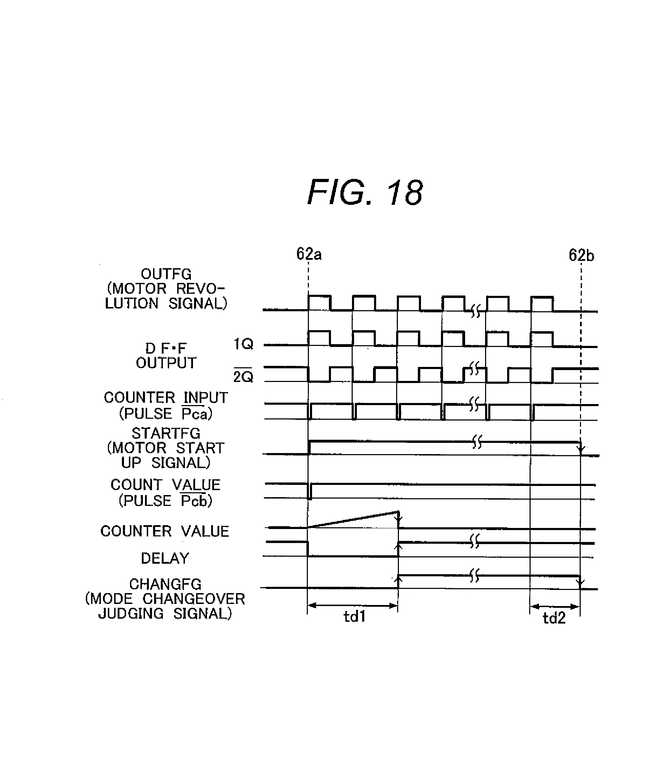

An operation of the control mode changeover judging part 62 will be explained with reference to Fig.18.

Fig.18 is a time chart showing an operation timing of the control mode changeover judging part 62.

At first, the motor startup signal STARTFG will be explained. When the motor revolution signal OUTFG is inputted to the D-FF circuit 623a, the D-FF 623a outputs an output signal 1Q (positive), the D-FF 624a outputs an output signal 2Q (negative), the NAND circuit 625a outputs a counter input pulse Pca representing an NAND output of the two outputs of 1Q (positive) and 2Q (negative).

As shown in Fig.18, when a counter pulse Pca is inputted to the counter 622a and the RS-Ff circuit 621a at the rising of the initial motor revolution signal OUTFG, the RS-FF circuit 621a is set and outputs a motor startup signal STARTFG (at timing 62a).

During the motor revolution, the sensing that the motor 2 is in a revolving condition while continuously keeping ON state of the motor startup signal STARTFG, can be performed by setting the preset data setting part that sets the reset time td2 of the motor startup signal STARTFG. Namely, it is sufficient if td2 (for example, more than 64ms) is set longer than the motor minimum revolution number sensing time in which the pulse cycle of the motor revolution signal OUTFG is determined.

The resetting of the motor startup signal STARTFG is performed after passing time td2 set by the preset data setting circuit 627a from generation of the last pulse of the motor revolution signal OUTFG (at timing 62b).

The mode changeover judging signal CHANGFG will be explained. When the motor startup signal STARTFG is turned ON, a pulse Pcb (negative) is inputted to the counter 622b, and the counter 622b begins counting up of the count value. When the count value reaches the delay time td1 set by the preset data setting part 627b, the RS-FF circuit 621b is reset. The delay time td1 can be set externally through the preset data setting part 627b, and an optimum time for td1 is set properly according to the characteristic of the motor 2. The reset signal of the RS-FF circuit 621b is inputted to the FF circuit 587 in the mode changeover judging signal producing part 620c, and turns ON the FF circuit 587. The OFF timing thereof is synchronized with the trailing of the motor startup signal STARTFG. Namely, the delay signal producing part 620b and the mode changeover judging signal producing part 620c set (ON) the mode changeover judging signal CHANGFG after passing time td1 from generation of the motor startup signal STARTFG.

The resetting (OFF) of the mode changeover judging signal CHANGFG is performed at the timing of when the motor startup signal STARTFG is turned OFF.

In the present embodiment, since the control mode changeover judging part 62 is constituted by a digital circuit, the external capacitors 581 and 584 are unnecessitated when compared with the control mode changeover judging part 58 constituted by analogue elements as in Fig.10. Accordingly, the circuit constituting the control mode changeover judging part 62 can be easily integrated, as a result, the size and cost reduction of the control mode changeover judging part 62 can be achieved.

As has been explained hitherto, the present invention is not limited to the above explained embodiments and a variety of other embodiments will be easily conceivable for a person skilled in the art. For example, in connection with the third ∼ fifth embodiments, although the respective Duty/V conversion part 60, motor revolution sensing part 61 and control mode changeover judging part 62 are explained separately, however, the motor control device can be constituted by making use of at least more than two of these Duty/V conversion part 60, motor revolution sensing part 61 and control mode changeover judging part 62 at the same time.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A sensorless-brushless motor control device comprising an inverter (3), an inverter drive circuit (4) that drives the inverter (3) and a current control part (53, 55) that controls the inverter drive circuit (4) according to a current command from a superior control part and includes a first order lag compensating part, **characterized by** further comprising a control mode changeover judging part (58) that judges changeover of a control gain of the current control part (53, 55) after startup of the sensorless-brushless motor (2) in response to a motor revolution sensing signal from the inverter drive circuit (4) and a control mode changeover part (52) that changes over the control gain of the current control part (53, 55) in response to an output of the control mode changeover judging part (58).

2. The sensorless-brushless motor control device according to claim 1, wherein the control mode changeover judging part (58) initiates a current control mode that feeds back a power source current to the current control part (53, 55) at the time of changing over the control gain, and the control mode changeover part (52) operates in response to the motor current.

3. The sensorless-brushless motor control device according to claim 1 or 2, wherein the current control part (53, 55) is comprised of: a switch for changing over ON and OFF of holding of a value of the power source current according to a PWM control use gate pulse signal for respective U, V and W phases of the inverter (3); and a voltage hold use capacitor (534) for sampling and holding an output signal voltage of a signal amplifier, and the current control part (53, 55) is configured to sense an intermittent power source current of the inverter (3) in a form of voltage, hold a voltage value of sensed the power source current in the voltage hold use capacitor (534) in synchronism with trailing of the PWM control use gate pulse signal for respective phases immediately before the power source current turns OFF, and output held the voltage value as the motor current to the control mode changeover part (52).

4. The sensorless-brushless motor control device according to at least one of claims 1-3, further comprising a torque up control part (57) that outputs a motor current increase command signal for increasing the motor current to the control mode changeover part (52) at the time of low velocity revolution of the sensorless-brushless motor, and the control mode changeover part (52) adds the motor current increase command signal to a current command value and is controlled in response to an output signal of the control mode changeover judging part (58).

5. The sensorless-brushless motor control device according to at least one of claims 1-4, wherein the control mode changeover judging part (58) is constituted by digital circuit elements.

6. An electric fluid pump that is driven by making use of a sensorless-brushless motor (2) and a sensorless-brushless motor control device according to at least one of claims 1-5 for controlling the sensorless-brushless motor (2), wherein the sensorless-brushless motor (2) is driven and controlled by the sensorless-brushless motor control device.

# FIG. 1

FIG. 2

# FIG. 3

# FIG. 4

## FIG. 5

## FIG. 6

# FIG. 7

(a)  PWM PULSE
     (PWM UN)

(b)  MOTOR
     CURRENT iu

(c)  POWER SOURCE
     CURRENT ib

(d)  CURRENT SENSING
     VALUE VbH
     (SAMPLE HOLD OUTPUT)

ON   OFF

HOLDING
PORTION

HOLD TIMING

# FIG. 8

56

57

564(C)   563(R)

Vcc

C R/C
A
B   Q̄
CLR

OUTFG

561    Vcc

CHANGFG

566

565    562

REVOLUTION SENSING

574   Vcc

Va

575

Vn

578

576    577

571

572

−
+
573

571

Vtu

TORQUE UP CONTROL

17

# FIG. 9

# FIG. 10

## FIG. 11

# FIG. 12

# FIG. 13

# FIG. 14

# FIG. 15

## FIG. 16

## FIG. 17

# FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004166436 A
- JP 2006254626 A